# EUROPEAN PATENT SPECIFICATION

(11) **EP 4 025 786 B1**
(45) Date of publication and mention of the grant of the patent: **04.12.2024**
(21) Application number: 20768542.1
(22) Date of filing: 03.09.2020
(51) Int. Cl.: F03D 80/50

(54) **BLADE ACCESS ARRANGEMENT FOR A ROTOR BLADE OF A WIND POWER PLANT**
SCHAUFELZUGANGSANORDNUNG FÜR EIN ROTORBLATT EINER WINDENERGIEANLAGE
AGENCEMENT D'ACCÈS DE PALE DESTINÉ À UNE PALE DE ROTOR D'UNE ÉOLIENNE

(30) Priority: 05.09.2019 DK PA201901054
(43) Date of publication of application: 13.07.2022
(73) Proprietor: PP Energy ApS, 6430 Nordborg (DK)
(72) Inventor: JUNKER, Peter Moos, 6430 Nordborg (DK); MARTENSEN, Lars, 6430 Nordborg (DK); PEDERSEN, Jesper Ankjær, 6430 Nordborg (DK)
(74) Representative: Keil & Schaafhausen Patentanwälte PartGmbB
(86) International application number: PCT/EP2020/074688
(87) International publication number: WO 2021/043948

(56) References cited:
- WO-A2-2009/121792
- KR-A- 20130 143 418
- KR-A- 20130 143 425
- KR-A- 20140 099 339
- US-B2- 10 161 389

## Description

The present invention relates to a blade access arrangement for a rotor blade of a wind power plant having a tower, the arrangement comprising a platform, tower guide means for guiding the platform against the tower, bar arrangement connecting the platform with the tower guiding means and a hoisting arrangement for hoisting the blade access arrangement up and down, the hoisting arrangement comprising two suspension points attached to the platform and a bar suspension point placed at the bar arrangement.

Such a blade access arrangement is known from KR 20130143425 A.

KR 20130143418 A shows a frame of a blade access arrangement the length of which can be extended and which comprises tower guide means for guiding the frame against the tower.

WO 2009/121792 A2 shows a maintenance platform for wind turbines which is slidably arranged on a frame having tower guide means for guiding the frame against the tower. The frame comprises a suspension point at the end near the tower.

A further blade access arrangement is known, for example, from US 2019/0010714 A1. A platform comprising three sub-platforms connected and with a hoisting arrangement comprising three lifting devices placed at the platform one at each of the sub platforms. It is challenging to control the platform in a horizontal plan in all positions of the platform. Especially in the situation where the platform is moving from the tower towards the blade and even more challenging when platform is moved closer to the blade tip where the distance between tower and blade is at its maximum.

The object underlying the invention is to have a blade access arrangement where the platform in all positions moves horizontal and controlled.

This object is solved with a blade access arrangement as described at the outset in that where the bar suspension point is placed in an area a third part from tower guiding means and a third part from the platform.

In most wind power plants, the tip of a downwardly pointing blade has a larger distance to the tower than the root of the blade. Blade access arrangement therefor have a tower guiding means for guiding the platform against the tower and a bar arrangement connecting the platform with the tower guiding means. Platforms may carry persons and or expensive and sensitive equipment's for servicing and/or repairing the blade. A stable and horizontal movement of the platform is essential, both when the platform moves along the tower and when the platform move from the tower towards the blade. A suspension point at the bar arrangement secure that the suspension point can be used for both supporting and carrying the tower guiding means, the bar arrangement and parts of the platform depending on how far the platform are from the tower guiding means.

In an embodiment of the invention the bar suspension point is placed at the bar arrangement between the tower guiding means and the platform.

One could imagine a solution where instead of having one suspension point placed at the bar arrangement between the tower guiding means and the platform two suspension points are used one placed at a sub platform closes to the tower and one at the tower guiding arrangement. These two-suspension points could be connected with one wire and the wire running over a pully placed above the blade access arrangement for example at the nacelle. Such a solution is not giving the same freedom of movement of the forces and weight as the present solution where the suspension point is placed at the bar arrangement. A solution where the bar suspension point is placed in an area a third part from tower guiding means and a third part from the platform gives a good position for a suspension point which in all situation can share forces and weight with further suspension points placed at the platform. A suspension point placed in an area a third part from tower guiding means and a third part from the platform, should be understood as, dividing the distance between tower guiding means and platform in three equal distances the suspension point is placed in the middle third part.

In an embodiment of the invention the bar suspension is placed at the bar arrangement halfway between the tower guiding means and the platform. This position of the suspension point gives in all location of the platform a good suspension point both when platform is close to tower, at distance max away from tower and when platform is at the blade tip or root.

In an embodiment of the invention the tower guide means comprise a bar arrangement having a variable length. When the length of the bar arrangement can be varied, it is possible to move the platform away from the tower towards the blade.

In an embodiment of the invention the bar arrangement comprises at least one telescopic bar. A telescopic bar can change the length by shifting one element into another element. This saves space.

In an embodiment of the invention the platform is arranged above the bar arrangement in direction of gravity. This minimizes the risk of an unwanted tilting of the platform.

In an embodiment of the invention the bar arrangement is retractable into a platform space. A platform space is a space extending from the platform in the direction of gravity and having a section corresponding to the form of the platform. When the bar arrangement can be retracted into this platform space, the platform can simply be balanced without having masses which are positioned in a disadvantageous position. The bar arrangement can be retracted into a space below the platform, into a space inside the platform or even into a space above the platform.

In an embodiment of the invention the bar arrangement comprises two bars. An arrangement of two bars has the advantage that the platform can be supported at the tower at two points. Thus, a lateral movement of the platform can be avoided or at least controlled.

In an embodiment of the invention an angle between the two bars is adjustable. This is of advantage when the bars are connected to sub-platforms which are moved relatively to each other to adjust an open configuration of the platform. Such an adjustment is not blocked by the bars.

In an embodiment of the invention the hoisting arrangement comprising a hoisting beam connecting the two bars and the bar suspension point is arranged at the hoisting beam. A suspension point arranged at the beam connecting the two bars gives a good suspension point for covering weight and forces from both bars.

In an embodiment of the invention the bar suspension point is arranged at the hoisting beam in a position approximately half way between the two bars. This is an advantage when the platform has two approximately parallel sides facing each other with approximately similar weight and forces acting on the blade access arrangement.

In an embodiment of the invention the bar suspension point can be moved along the hoisting beam such a movement can compensate for change in weight and forces between sub platforms.

In an embodiment of the invention the hoisting beam is connected with wire ropes to the two bars this allows the distance between the bars to be changed without changing the picture of the forces and weight for the blade access arrangement.

In an embodiment of the invention the hoisting beam has form as a triangle, the wording triangle is referring to the form of the music instrument with the same name. Such a form can give basis for support not only for the bar suspension point but also support for a lifting device, winding gear or an electric powered wire rope hoist.

The blade access arrangement can be hoisted from a lifting apparatus such as a crane. A crane placed in connection with the nacelle or a standalone crane solution. But the hoisting could as well be the situation that the bar suspension point and further suspension points are connected to the upper part of the wind power plan like the nacelle or rotor or other arrangement located in connection with the nacelle or rotor. For such a solution a lifting arrangement can be connection with the bar suspension point. A lifting device could for example be winding gear or an electric powered wire rope hoist.

In an embodiment of the invention the hoisting arrangement comprising further suspension points placed at the platform preferably at least three suspension points, one at the bar arrangement and two at the platform. The two platform suspensions are typically placed opposite each other on two sub- platforms. The suspension points from the platform can in relation to the sub-platform be stationary suspension points or suspension points movable along the sides of the sub-platforms.

The invention will now be described in more detail with reference to the drawing, in which:
- Fig. 1: shows a blade access arrangement upon start,
- Fig. 2: the blade access arrangement in a first step of operation,
- Fig. 3: the blade access arrangement in a second step of operation,
- Fig. 4: the blade access arrangement in a third step of operation,
- Fig. 5: the blade access arrangement in perspective view,
- Fig. 6: the blade access of the blade access arrangement in a side view.

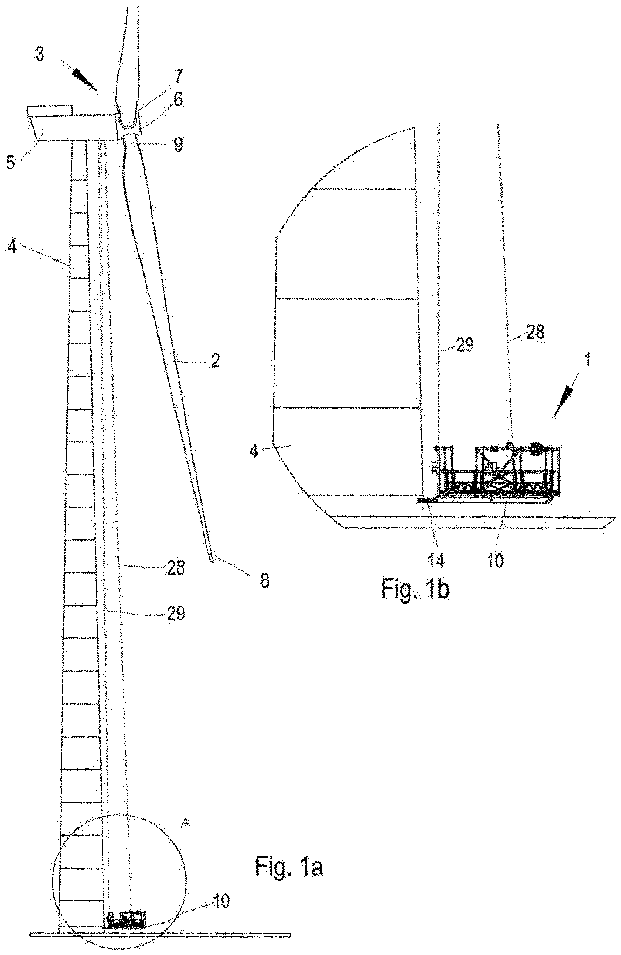

Fig. 1 is split into two figures a Fig. 1a showing a wind power plan and a blade access arrangement where Fig. 1b shows a detail A of Fig. 1a. In the following Fig. 1a and Fig, 1b in combination referred to as Fig. 1.

Fig. 1a shows a blade access arrangement 1 for a rotor blade 2 of a wind power plant 3. The wind power plant 3 has a tower 4. A nacelle 5 is arranged on top of the tower. The blade 2 is fixed to a hub 6 of a rotor 7 which is rotatably supported in the nacelle 5.

It can be seen in Fig. 1a, that a tip 8 of the blade 3 has a larger distance to the tower than a root 9 of the blade. This makes access of the blade 2 difficult. However, access is necessary, for example for inspection, maintenance and repair of the blade 2.

The blade access arrangement 1 comprises a platform 10, The platform 10 is connected to tower guide means 14 which rest against the tower 4. The tower guide means 14 can be provided with rollers so that the tower guide means can guide the platform 10 along the tower 4. The tower guide means 14 are connected to the platform 10 by means of a bar arrangement which is difficult to see at Fig. 1 but will be described in detail with reference to the following figures.

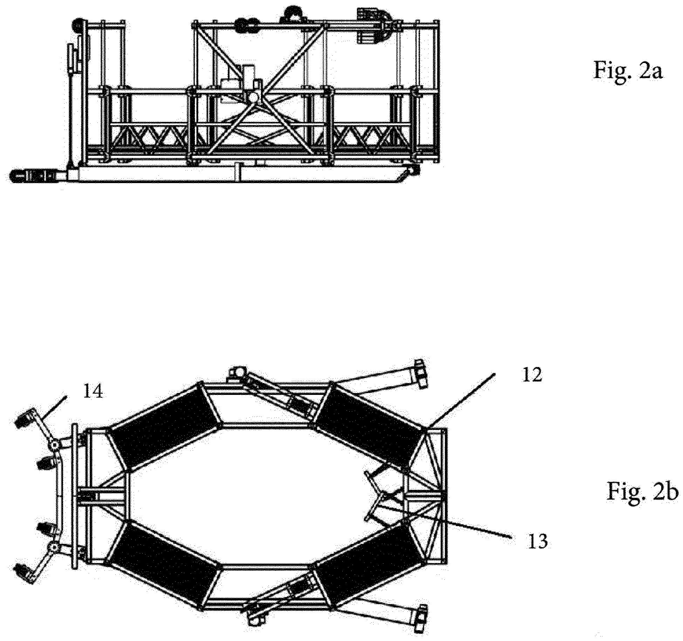

Fig. 1 shows the blade access arrangement 1 in a starting position, in which the platform 10 is near ground. The blade access arrangement 1 is suspended by three wire ropes 28, 29 from the nacelle 5. Only two of the wire ropes are visible, because one of the wire ropes is located behind the wire rope 28. The blade access arrangement disclosed has three suspension points, each represented by an electric powered wire rope hoist where two of them 28 are attached to the platform 10. The third wire rope 29 is attached to the bar arrangement this arrangement will be described further with reference to Fig. 2-6.

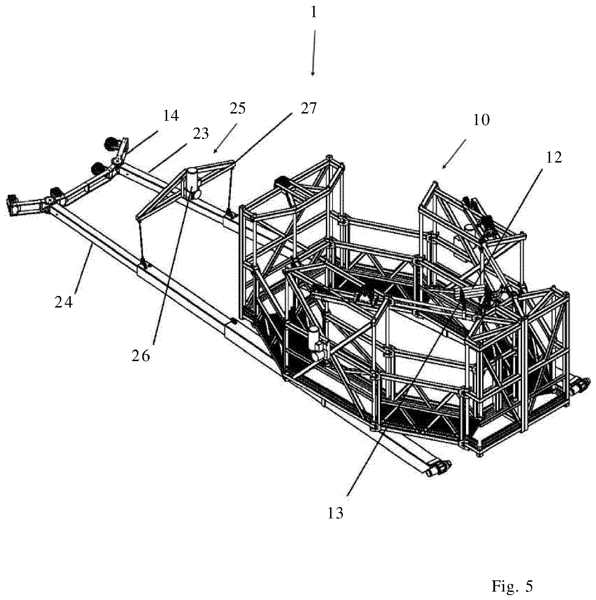

Fig. 5 is disclosing a blade access arrangement 1 comprises a platform 10 having blade guide means 12, 13. These guiding elements 12, 13 can comprise rollers which can be pivoted with respect to the platform 10. The platform 10 disclosed at the Fig. 1-6 is a blade guided platform which as well can be tower guided. The invention function as well for platforms which alone is tower guided.

The tower guide means 14 are connected to the platform 10 by means of a bar arrangement which has, in the embodiment shown in Fig. 5, two bars 23, 24 which have a variable length. This is realized by the fact that the bars 23, 24 are telescopic bars. The bars 23, 24 can be retracted in a space below the platform 10 or into the platform 10. This makes it easier to balance out the platform 10 in a working position.

Fig. 2-4 discloses the blade access arrangement 1 in three different working position for the platform in relation to the tower. The tower and the blade are not disclosed in the figures. All three working positions are disclosed in a sectional view and in addition the blade access arrangement 1 from above.

Fig. 2. Shows the blade access arrangement 1 in a starting position, in which the platform 10 is near ground and the two bars 23, 24 is not extended. The blade access arrangement 1 has the same configuration for the bars 23, 24 in the situation where the platform 10 has been lifted up to the nacelle 5. This means that the platform 10 is lifted near to the root 9 of the blade 2, where the distance between tower and blade is at I shortest distance.

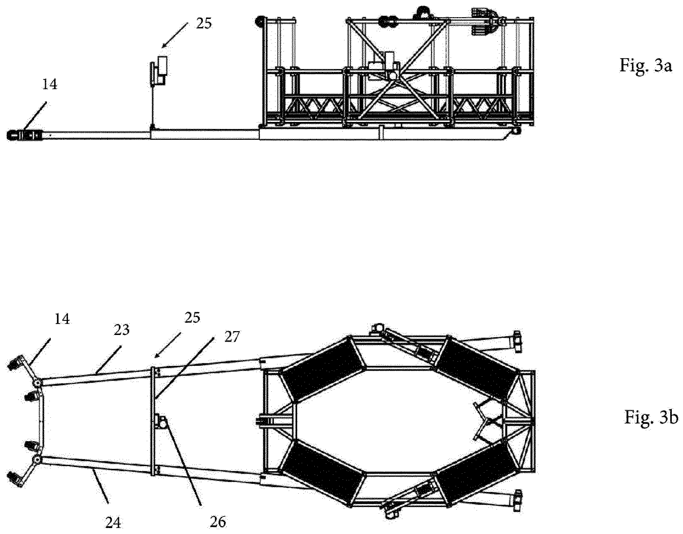

Fig. 3 shows the blade access arrangement 1 in a situation in which the distance between the tower and blade is longer. In this situation, the bars 23, 24 are extended. Upon this extension the platform 10 is pushed away from the tower and can approaches the blade.

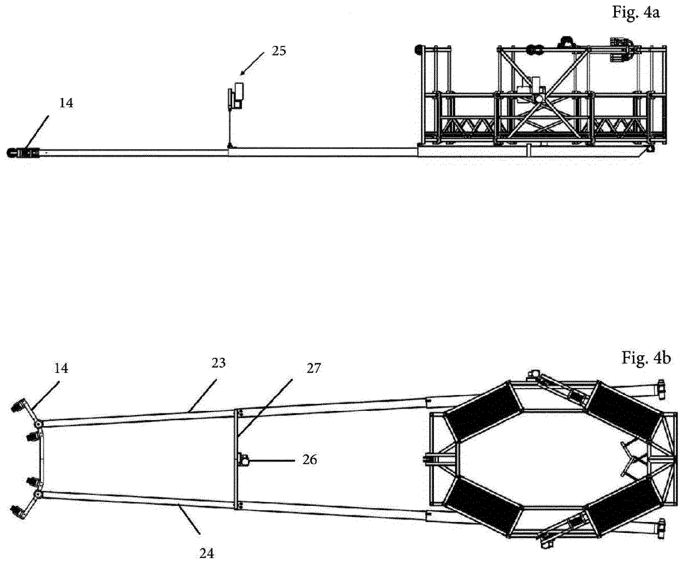

Fig. 4 shows the blade access arrangement 1 in a situation in which the distance between the tower and blade is longer in this situation, the bars 23, 24 are extended even further compared to the situation disclosed in Fig. 3.

Figures 2-4 shows a hoisting arrangement 25 with a hoisting beam 27 connecting the two bars 23, 24 and with the bar suspension point 26 arranged at the hoisting beam 27.

It can be seen from the figures that in all situation is the bar suspension point 26 situated in a position at the bar arrangement 23, 24 halfway between the tower guiding means 14 and the platform 10.

The typical use of a tower guided platform with blade guiding elements 12, 13 is that the Blade access arrangement is placed closed to the tower 4, wires 28, 29 from the hoisting arrangement is connected to the wind power plan typical in connection with the nacelle 5. The tower guide means 14 rest against the tower 4. The tower guide means 14 can be provided with rollers so that the tower guide means can guide the platform 10 along the tower 4. The bar arrangement 23, 24 is in this situation in a not extended position, this is the situation as disclosed in figure 2. The blade access arrangement is lifted with the wires 28, 29. When the platform 10 is lifted to a position in which the platform 10 is close to the blade 2. This means that the platform is lifted near to the root 9 of the blade 2. In this position the bars 23, 24 are extended. Upon this extension the platform 10 is pushed away from the tower 4 and approaches the blade 2. During this movement (or before the movement) the platform 10 has been changed from a closed configuration as disclosed into an open configuration (not disclosed) so that an opening 11 of the platform 10 is open to the blade 2. To this end, two sub-platform parts have been moved away from each other. As soon as the open configuration has been adjusted, the platform 10 can be shifted to catch the blade 2 and then be adjusted again in closed configuration wherein the blade 2 is accommodated within the opening 11 and the guiding elements 12, 13 rest against the leading edge of the blade 2. In this situation the platform 10 is guided at the tower 4 and at the blade 2. Such a double guiding is in principle not necessary, so that in a further step the bar arrangement 23, 24 are retracted by shortening the bars 23, 24 so that finally a situation as shown in Fig. 2 is reached. Once the blade 2 guides the platform 10, the platform 10 can be lowered in a direction to the tip 8 of the blade or raised in the opposite direction, so that the whole blade 2 can be inspected, maintained, or repaired. Thus, the blade access arrangement 1 combines the advantages of a tower guided system with the advantages of a blade guided system. However, the access to the blade 2 is made simpler and the platform 10 or working plane can be kept stable in all positions.

It should be noted that the bars 23, 24 can be retracted into or below the platform 10 once the desired position is achieved and the platform 10 is guided by the blade 2 This makes it easier to balance out the platform 10 in a working position. The bars 23, 24 can furthermore be retracted into or below the platform 10 when the platform is in a position close to the tower 4 or when the blade access arrangement is in a transportation situation.

An angle between the two bars 23, 24 is variable. It can be adjusted, wherein the adjustment is made by varying the distance of the platform 10 from the tower 4.

Fig. 5 disclose the blade access arrangement 1 in a situation where the bar arrangement 23, 24 connecting the platform 10 with the tower guiding means 14 is extended. Three suspension points are disclosed two at the platform and one at the bar arrangement 23, 24. The bar suspension point 26 is place on a hoisting beam 27 connecting the two bars. A suspension point arranged at the beam connecting the two bars gives a good suspension point for covering weight and forces from both bars.

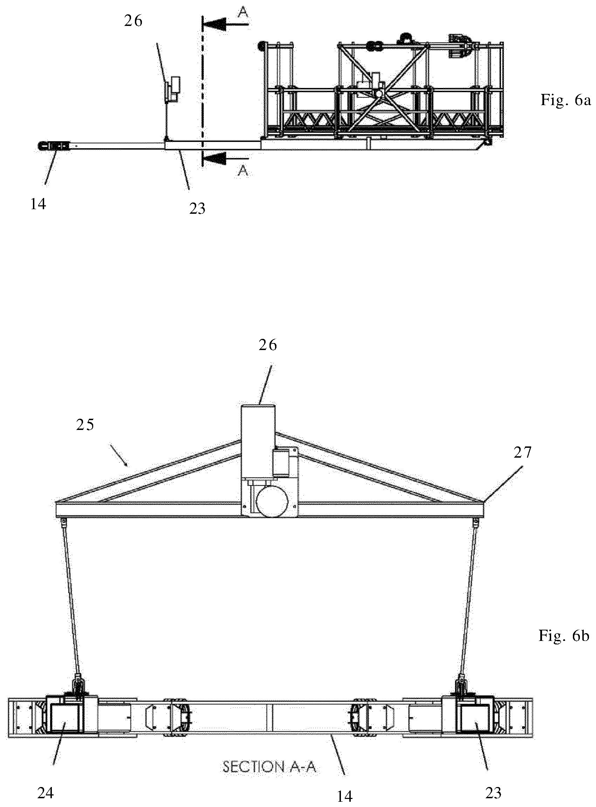

Fig. 6a shows a blade access arrangement from the side, Fig. 6b shows the section cut A-A from Fig. 6a.

The bar suspension point 26 is arranged at the hoisting beam 27 in a position approximately half way between the two bars. This is an advantage when the platform has two approximately parallel sides facing each other with approximately similar weight and forces acting on the blade access arrangement. The bar suspension point 26 can be moved along the hoisting beam 27 such an movement can compensate for change in weight and forces between sub platforms. The hoisting beam 27 is connected with wire ropes to the two bars this allows the distance between the bars to be changed without changing the picture of the forces and weight for the blade access arrangement. The hoisting beam 27 has form as a triangle, the wording triangle is referring to the form of the music instrument with the same name. Such a form can give basis for support not only for the bar suspension point but also support for a lifting device, winding gear or an electric powered wire rope hoist.

The blade access arrangement can be hoisted from a lifting apparatus such as a crane. A crane placed in connection with the nacelle or a standalone crane solution. But the hoisting could as well be the situation that the bar suspension point and further suspension points are connected to the upper part of the wind power plan like the nacelle or rotor or other arrangement located in connection with the nacelle or rotor. For such a solution a lifting arrangement can be connection with the bar suspension point. A lifting device could for example be winding gear or an electric powered wire rope hoist.

## Claims

1. Blade access arrangement (1) for a rotor blade (2) of a wind power plant (3) having a tower (4), the arrangement (1) comprising a platform (10), tower guide means (14) for guiding the platform (10) against the tower (4), bar arrangement (23, 24) connecting the platform (10) with the tower guiding means (14) and a hoisting arrangement (25) for hoisting the blade access arrangement (1) up and down, the hoisting arrangement (25) comprising two suspension points at the platform (10) and a bar suspension point (26) placed at the bar arrangement (23, 24), **characterized in that** the bar suspension point (26) is placed in an area a third part from tower guiding means (14) and a third part from the platform (10), meaning that the distance between the tower guiding means and the platform is divided in three equal distances and the suspension point is placed in the middle third part.

2. Blade access arrangement according to claim 1, **characterized in that** the bar suspension point (26) is placed at the bar arrangement (23, 24) between the tower guiding means (14) and the platform (10).

3. Blade access arrangement according to claim 1, **characterized in that** the bar suspension point (26) is placed at the bar arrangement (23, 24) halfway between the tower guiding means (14) and the platform (10).

4. Blade access arrangement according to any of the claims 1 to 3, **characterized in that** the bar arrangement (23, 24) having a variable length.

5. Blade access arrangement according to claim 4, **characterized in that** the bar arrangement (23, 24) comprises at least one telescopic bar.

6. Blade access arrangement according to any of claims 1 to 5, **characterized in that** the bar arrangement (23, 24) comprises two bars.

7. Blade access arrangement according to claim 6, **characterized in that** an angle between the two bars is adjustable.

8. Blade access arrangement according to any of the claims 6 or 7, **characterized in that** the hoisting arrangement (25) comprising a hoisting beam (27) connecting the two bars and that the bar suspension point (26) is arranged at the hoisting beam (27).

9. Blade access arrangement according to claim 8, **characterized in that** the bar suspension point (26) is arranged at the hoisting beam (27) in a position approximately half way between the two bars (23,24).

10. Blade access arrangement according to claim 8, **characterized in that** the bar suspension point (26) can be moved along the hoisting beam (27).

11. Blade access arrangement according to any of the claims 8 to 10, **characterized in that** the hoisting beam (27) is connected with wire ropes to the two bars.

12. Blade access arrangement according to claim 8, **characterized in that** the hoisting beam (27) has form as a triangle.

13. Blade access arrangement according to any of claims 1 to 12, **characterized in that** a lifting device is arrange in connection with the bar suspension point (26).

14. Blade access arrangement according to any of claims 1 to 13, **characterized in that** the hoisting arrangement (25) comprising further suspension points placed at the platform.

15. Blade access arrangement according to claim 14, **characterized in that** the hoisting arrangement (25) comprising at least three suspension points.

## Patentansprüche

1. Schaufelzugangsanordnung (1) für ein Rotorblatt (2) einer Windenergieanlage (3) mit einem Turm (4), wobei die Anordnung (1) eine Plattform (10), Turmführungsmittel (14) zum Führen der Plattform (10) gegen den Turm (4), eine Stangenanordnung (23, 24), die die Plattform (10) mit den Turmführungsmitteln (14) verbindet, und eine Hebeanordnung (25) zum Hoch- und Herunterheben der Schaufelzugangsanordnung (1) aufweist, wobei die Hebeanordnung (25) zwei Aufhängungspunkte an der Plattform (10) und einen Stangenaufhängungspunkt (26) aufweist, der an der Stangenanordnung (23, 24) angeordnet ist, **dadurch gekennzeichnet, dass** der Stangenaufhängungspunkt (26) in einem Bereich angeordnet ist, der einen dritten Teil von den Turmführungsmitteln (14) und einen dritten Teil von der Plattform (10) entfernt ist, was bedeutet, dass der Abstand zwischen der Turmführungseinrichtung und der Plattform in drei gleiche Abstände unterteilt ist und der Aufhängungspunkt in dem mittleren dritten Teil angeordnet ist..

2. Schaufelzugangsanordnung nach Anspruch 1, **dadurch gekennzeichnet, dass** der Stangenaufhängungspunkt (26) an der Stangenanordnung (23, 24) zwischen der Turmführung (14) und der Plattform (10) angeordnet ist.

3. Schaufelzugangsanordnung nach Anspruch 1, **dadurch gekennzeichnet, dass** der Stangenaufhängungspunkt (26) an der Stangenanordnung (23, 24) auf halbem Weg zwischen den Turmführungsmitteln (14) und der Plattform (10) angeordnet ist.

4. Schaufelzugangsanordnung nach einem der Ansprüche 1 bis 3, **dadurch gekennzeichnet, dass** die Stangenanordnung (23, 24) eine variable Länge aufweist.

5. Schaufelzugangsanordnung nach Anspruch 4, **dadurch gekennzeichnet, dass** die Stangenanordnung (23, 24) mindestens eine Teleskopstange aufweist.

6. Schaufelzugangsanordnung nach einem der Ansprüche 1 bis 5, **dadurch gekennzeichnet, dass** die Stangenanordnung (23, 24) zwei Stangen aufweist.

7. Schaufelzugangsanordnung nach Anspruch 6, **dadurch gekennzeichnet, dass** ein Winkel zwischen den beiden Stangen einstellbar ist.

8. Schaufelzugangsanordnung nach einem der Ansprüche 6 oder 7, **dadurch gekennzeichnet, dass** die Hebeanordnung (25) einen die beiden Stäbe verbindenden Hebebalken (27) aufweist und dass der Stangenaufhängungspunkt (26) am Hebebalken (27) angeordnet ist.

9. Schaufelzugangsanordnung nach Anspruch 8, **dadurch gekennzeichnet, dass** der Stangenaufhängungspunkt (26) an dem Hebebalken (27) in einer Position etwa auf halber Strecke zwischen den beiden Stangen (23, 24) angeordnet ist.

10. Schaufelzugangsanordnung nach Anspruch 8, **dadurch gekennzeichnet, dass** der Stangenaufhängungspunkt (26) entlang der Hebebalken (27) bewegt werden kann.

11. Schaufelzugangsanordnung nach einem der Ansprüche 8 bis 10, **dadurch gekennzeichnet, dass** der Hebebalken (27) über Drahtseile mit den beiden Stäben verbunden ist.

12. Schaufelzugangsanordnung nach Anspruch 8, **dadurch gekennzeichnet, dass** der Hebebalken (27) die Form eines Dreiecks hat.

13. Schaufelzugangsanordnung nach einem der Ansprüche 1 bis 12, **dadurch gekennzeichnet, dass** eine Hebevorrichtung in Verbindung mit dem Stangenaufhängungspunkt (26) angeordnet ist.

14. Schaufelzugangsanordnung nach einem der Ansprüche 1 bis 13, **dadurch gekennzeichnet, dass** die Hebeanordnung (25) weitere Aufhängepunkte aufweist, die an der Plattform angeordnet sind.

15. Schaufelzugangsanordnung nach Anspruch 14, **dadurch gekennzeichnet, dass** die Hebeanordnung (25) mindestens drei Aufhängepunkte aufweist.

## Revendications

1. Agencement d'accès à une pale (1) pour une pale de rotor (2) d'une centrale éolienne (3) ayant une tour (4), l'agencement (1) comprenant une plateforme (10), des moyens de guidage de tour (14) pour guider la plateforme (10) contre la tour (4), un agencement de barres (23, 24) reliant la plateforme (10) aux moyens de guidage de tour (14) et un agencement de levage (25) pour lever et abaisser l'agencement d'accès à la pale (1), l'agencement de levage (25) comprenant deux points de suspension au niveau de la plateforme (10) et un point de suspension de barre (26) placé au niveau de l'agencement de barres (23, 24), **caractérisé en ce que** le point de suspension de barre (26) est placé dans une zone située à un tiers des moyens de guidage de tour (14) et à un tiers de la plateforme (10), ce qui signifie que la distance entre les moyens de guidage de tour et la plateforme est divisée en trois distances égales et que le point de suspension est placé dans le tiers central.

2. Agencement d'accès à une pale selon la revendication 1, **caractérisé en ce que** le point de suspension de barre (26) est placé au niveau de l'agencement de barres (23, 24) entre les moyens de guidage de tour (14) et la plateforme (10).

3. Agencement d'accès à une pale selon la revendication 1, **caractérisé en ce que** le point de suspension de barre (26) est placé au niveau de l'agencement de barres (23, 24) à mi-chemin entre les moyens de guidage de tour (14) et la plateforme (10).

4. Agencement d'accès à une pale selon l'une des revendications 1 à 3, **caractérisé en ce que** l'agencement de barres (23, 24) a une longueur variable.

5. Agencement d'accès à une pale selon la revendication 4, **caractérisé en ce que** l'agencement de barres (23, 24) comprend au moins une barre télescopique.

6. Agencement d'accès à une pale selon l'une des revendications 1 à 5, **caractérisé en ce que** l'agencement de barres (23, 24) comprend deux barres.

7. Agencement d'accès à une pale selon la revendication 6, **caractérisé en ce qu'**un angle entre les deux barres est réglable.

8. Agencement d'accès à une pale selon l'une des revendications 6 ou 7, **caractérisé en ce que** l'agencement de levage (25) comprend une poutre de levage (27) reliant les deux barres et **en ce que** le point de suspension de barre (26) est agencé au niveau de la poutre de levage (27).

9. Agencement d'accès à une pale selon la revendication 8, **caractérisé en ce que** le point de suspension de barre (26) est agencé au niveau de la poutre de levage (27) dans une position approximativement à mi-chemin entre les deux barres (23, 24).

10. Agencement d'accès à une pale selon la revendication 8, **caractérisé en ce que** le point de suspension de barre (26) peut être déplacé le long de la poutre de levage (27).

11. Agencement d'accès à une pale selon l'une des revendications 8 à 10, **caractérisé en ce que** la poutre de levage (27) est reliée aux deux barres par des câbles métalliques.

12. Agencement d'accès à une pale selon la revendication 8, **caractérisé en ce que** la poutre de levage (27) a une forme triangulaire.

13. Agencement d'accès à une pale selon l'une des revendications 1 à 12, **caractérisé en ce qu'**un dispositif d'élévation est agencé en liaison avec le point de suspension de barre (26).

14. Agencement d'accès à une pale selon l'une des revendications 1 à 13, **caractérisé en ce que** l'agencement de levage (25) comprend des points de suspension supplémentaires placés au niveau de la plateforme.

15. Agencement d'accès à une pale selon la revendication 14, **caractérisé en ce que** l'agencement de levage (25) comprend au moins trois points de suspension.
